# FASCICULE DE BREVET EUROPEEN

(11) **EP 2 307 253 B1**
(45) Date de publication et mention de la délivrance du brevet: **12.12.2012**
(21) Numéro de dépôt: 09784437.7
(22) Date de dépôt: 26.06.2009
(51) Int. Cl.: B60T 8/172, B60W 40/109, B60K 28/16, B60T 8/24, B60W 40/06

(54) **DISPOSITIF D'EVALUATION DE L'ACCELERATION TRANSVERSALE D'UN VEHICULE AUTOMOBILE ET PROCEDE CORRESPONDANT**
VORRICHTUNG ZUR BESTIMMUNG DER QUERBESCHLEUNIGUNG EINES MOTORFAHRZEUGS UND ENTSPRECHENDES VERFAHREN
DEVICE FOR EVALUATING THE TRANSVERSE ACCELERATION OF A MOTOR VEHICLE AND CORRESPONDING METHOD

(30) Priorité: 09.07.2008 FR 0854669
(43) Date de publication de la demande: 13.04.2011
(73) Titulaire: Renault S.A.S., 92100 Boulogne-Billancourt (FR)
(72) Inventeur: VANDEKERKHOVE, Rémi, F-75012 Paris (FR)
(86) Numéro de dépôt international: PCT/FR2009/051226
(87) Numéro de publication internationale: WO 2010/004178

(56) Documents cités:
- DE-A1- 4 403 335
- DE-A1- 4 429 242
- DE-A1- 19 528 625
- DE-A1- 19 911 301
- DE-A1- 19 962 328
- DE-C1- 19 510 104
- US-A- 5 876 101
- US-A1- 2005 140 207

## Description

La présente invention concerne un procédé de détection d'une situation de virage en vue notamment de l'élaboration d'une consigne pour une transmission d'un groupe moto-propulseur de véhicule automobile. Elle concerne aussi un dispositif mettant en oeuvre un tel procédé de détection.

Une transmission automatisée de véhicule automobile comporte classiquement un bloc de commande recevant un ou plusieurs paramètres d'entrée interprétant entre autres, l'état de la route : pente, changement de pente, courbure,... Puis, en fonction des valeurs de ces paramètres, le bloc de commande délivre une consigne de rapport de transmission à appliquer, assortie éventuellement de consignes de "blocage" interdisant temporairement, en vue d'un meilleur confort de conduite, les changements de rapports montants ou descendant, par exemple dans certains cas où le véhicule est en situation de virage.En phase de virage, un conducteur, au volant d'un véhicule automobile équipé d'une transmission automatique classique doit en effet faire face à des situations de conduite inconfortables.

Par exemple, en abordant un virage, le conducteur relâche généralement la pédale d'accélération. La boîte de vitesse automatique qui était au préalable sur un rapport donné, passe alors directement au rapport supérieur du fait des lois de passage classique d'une boîte de vitesse automatique. Elle prive ainsi le véhicule automobile de frein moteur. Le passage au rapport supérieur provoque alors une sensation désagréable d'embarquement du véhicule automobile.

On connaît déjà dans l'état de la technique, des procédés et des dispositifs associés qui permettent d'effectuer des adaptations pour tenter d'améliorer le confort du conducteur et des passagers en phase de virage.

Le brevet FR 2 779 793 déposé par la demanderesse décrit un système d'adaptation automatique d'une boîte de vitesse de véhicule en situation de virage. Le système détecte une situation de virage en fonction de l'accélération transversale du véhicule, puis en fonction du régime moteur et des efforts résistants appliqués au véhicule, adapte la stratégie de changement de rapport.

L'accélération transversale peut-être déterminée soit par des accéléromètres, soit calculée à partir des vitesses de rotation d'une roue droite et d'une roue gauche non motrices du véhicule, tel que décrit dans le brevet FR 2802 646 déposé par la demanderesse. Le calcul proposé par le brevet FR 2802 646 suppose que les roues adhèrent à la chaussée sans glissement, et nécessite donc que les capteurs de vitesse mesurent la rotation de roues non motrices du véhicule.

Le brevet GB 2 381 873 (Robert Bosch GmbH) propose d'utiliser simultanément un calcul d'accélération transversale à partir des vitesses des roues du véhicules, et les résultats de mesure d'un accéléromètre transversal, afin d'évaluer l'accélération transversale avec plus de fiabilité. Ce brevet propose d'écarter comme non valides les valeurs d'accélération transversale dépassant un seuil prédéfini, que cette accélération soit issue de la mesure de l'accéléromètre ou déduite des vitesses des roues. Ce brevet propose de suspendre l'interprétation de l'accélération transversale en cas de patinage excessif, défini par une vitesse de roue intérieure au virage supérieure à la vitesse d'avancement du véhicule, ou par une vitesse de roue extérieure au virage inférieure à la vitesse d'avancement du véhicule. Cette méthode nécessite la présence simultanée de capteurs de vitesses de roues et d'un accéléromètre transversal, avec les coûts et les aléas de fonctionnement qui s'y rattachent.

Le document DE 195 28 625 A1 est considéré comme l'état de la technique le plus proche et décrit les caractéristiques du préambule de la revendication 1.

La présente invention vise à remédier aux lacunes des documents précités. L'objet de la présente invention est de proposer un procédé permettant de détecter les phases pendant lesquelles le glissement des roues motrices par rapport au sol est trop important, ce qui conduit surestimer l'accélération transversale. Une telle surestimation peut en effet conduire à interdire de manière intempestive un changement de rapport montant, en absence d'un virage de la chaussée qui justifierait une telle interdiction.

La présente invention propose un dispositif et un procédé d'évaluation de l'accélération transversale du véhicule qui utilise des capteurs déjà installés sur le véhicule à d'autres effets. L'invention permet notamment d'exploiter les données de capteurs de vitesses de roues motrices du véhicule, et est à ce titre particulièrement avantageuse pour améliorer le confort de conduite de véhicules qui ne disposent pas de moyen de mesure de la vitesse des roues non motrices du véhicule.

Le principe de l'invention consiste à effectuer une première estimation de l'accélération transversale du véhicule à partir des vitesses de rotation d'une roue droite et d'une roue gauche, puis à effectuer une série de tests pour vérifier si cette valeur estimée est fiable ou non. Si la fiabilité de la valeur estimée n'est pas confirmée, on affecte à l'accélération transversale une valeur arbitraire, par exemple la valeur nulle, ou une autre constante identifiable par les procédés de commande qui utilisent cette accélération transversale. Les tests de fiabilité sont effectués en fonction d'autres paramètres de fonctionnement du véhicule qui sont également accessibles dans la configuration "de série" du véhicule, c'est-à-dire sans capteur spécifique à l'invention.

Dans un mode de réalisation, un dispositif d'évaluation de l'accélération transversale d'un véhicule automobile comprend des moyens de mesure des vitesses de rotation de deux roues du véhicule et un module d'estimation de l'accélération transversale du véhicule à partir de ces vitesses. Le dispositif comprend en outre un module de validation apte à calculer, en fonction de paramètres de fonctionnement du véhicule, notamment des vitesses de rotation desdites roues et du rapport de transmission engagé, une variable booléenne de patinage qui est négative si l'accélération transversale estimée par le module est pertinente pour détecter un virage, et qui est positive dans le cas contraire.

Avantageusement, lesdites roues sont une roue droite motrice et une roue gauche motrice appartenant à un même train de roues du véhicule.

Dans une variante de réalisation, le dispositif comprend en outre un module de correction apte à délivrer une valeur corrigée de l'accélération transversale de manière à ce que ladite valeur corrigée soit égale à la valeur estimée précédemment de l'accélération transversale si la variable booléenne de patinage est négative, et que cette valeur corrigée soit égale à une constante arbitraire dans le cas contraire.

Cette variante peut comprendre un dispositif de retard induisant une temporisation soit du changement de valeur, de positive à négative, de la variable de patinage, soit du changement de valeur de la valeur corrigée de l'accélération transversale lorsqu'elle cesse d'être égale à ladite constante arbitraire.

Dans un mode de réalisation préféré, le module de validation comprend un premier module booléen apte à délivrer une première variable booléenne de sur accélération de roue. Ce module comprend un premier moyen de calcul des accélérations des deux roues, un second moyen de calcul d'un seuil d'accélération plausible de ces roues en fonction du rapport de transmission engagé, des premiers moyens de comparaison des accélérations de chacune des deux roues par rapport audit seuil d'accélération plausible de roues, des seconds moyens de comparaison de la différence de vitesse entre les deux roues par rapport à un seuil d'écart, et des moyens de mémorisation de la variable booléenne de sur accélération de roue.

Dans une variante du mode de réalisation précédent, le module de validation comprend en outre un second module booléen recevant la valeur de la consigne d'accélération du conducteur et apte à délivrer une seconde variable booléenne de coup de pédale en virage. Ce module de validation comprend un moyen de sommation qui additionne la variable booléenne de sur accélération de roue et la variable booléenne de coup de pédale en virage pour obtenir la variable booléenne de patinage.

De manière préférentielle, dans cette variante de réalisation le second module booléen comprend un moyen de dérivation par rapport au temps de la consigne d'accélération du conducteur, comprend des moyens de comparaison de la consigne d'accélération, de sa dérivée, et de l'accélération transversale estimée précédemment, respectivement par rapport à trois valeurs de seuil de consigne, de seuil de dérivée de consigne, de seuil de centrifugation accélérée, et comprend des moyens de mémorisation de la variable booléenne de coup de pédale en virage.

Dans un autre mode de réalisation, un dispositif de détection d'une situation de virage pour commande d'organe de véhicule automobile, notamment pour commande de transmission automatisée, comprend un des dispositifs d'évaluation décrits ci-dessus, ainsi qu'un module d'arbitrage apte à décider si le véhicule est en situation de virage. Ce module d'arbitrage comprend un moyen de comparaison de l'accélération transversale du véhicule par rapport à une première valeur de seuil d'arbitrage. Il peut également comprendre un moyen de comparaison de la dérivée de l'accélération par rapport au temps de cette accélération, par rapport à une seconde valeur de seuil d'arbitrage. Avantageusement, le module d'arbitrage peut être configuré pour décider que le véhicule est en situation de virage si l'accélération transversale estimée ou sa dérivée sont supérieures à leurs seuils d'arbitrage respectifs.

Selon un autre aspect, il est proposé un procédé d'évaluation de l'accélération transversale d'un véhicule automobile, dans lequel on mesure les vitesses de rotation de deux roues motrices du véhicule, on estime l'accélération transversale du véhicule à partir de ces vitesses de roues, et on calcule en fonction de paramètres de fonctionnement du véhicule, notamment des vitesses de rotation desdites roues motrices et du rapport de transmission engagé, une variable booléenne de patinage qui est négative si l'accélération transversale estimée par le module est pertinente pour détecter un virage et qui est positive dans le cas contraire.

Dans une variante de mise en oeuvre de ce procédé, le calcul de la variable booléenne de patinage peut également prendre en compte la consigne d'accélération du conducteur, par exemple la position de la pédale d'accélération du véhicule et/ou la dérivée par rapport au temps de cette position de la pédale d'accélération.

Dans un mode de mise en oeuvre préféré du procédé, si la variable de patinage est positive, on corrige ensuite l'accélération transversale correspondante en lui attribuant une valeur arbitraire.

Avantageusement, la variable booléenne de patinage est la somme d'une première variable booléenne de sur accélération de roue et d'une seconde variable booléenne de coup de pédale en virage dont le calcul comprend les étapes suivantes :
- on calcule, à l'aide d'une cartographie mémorisée, un premier seuil d'accélération plausible de roues en fonction du rapport de transmission engagé; si la dérivée par rapport au temps d'une des vitesses mesurées de rotation de roues est supérieure à ce premier seuil d'accélération plausible de roues, la variable de sur accélération de roue est positive; si les deux dérivées par rapport au temps des vitesses mesurées de rotation de roues sont inférieures à ce premier seuil d'accélération plausible de roues et que simultanément la différence de vitesses de rotation des deux roues est inférieure à un seuil d'écart, constant, la variable de sur accélération de roue est négative; dans les autres cas la variable de sur accélération de roue conserve sa valeur ;
- on calcule la dérivée par rapport au temps de la consigne d'accélération du conducteur;
- on compare la consigne d'accélération du conducteur, sa dérivée, et l'accélération transversale estimée du véhicule par rapport à trois valeurs de seuil de consigne, de seuil de dérivée de consigne, et de seuil de centrifugation accélérée; si les trois valeurs sont simultanément supérieures à leurs seuils respectifs, la variable de coup de pédale en virage est positive; si l'accélération transversale du véhicule est inférieure à son seuil respectif, la variable de coup de pédale en virage est négative; dans les autres cas la variable de coup de pédale en virage conserve sa valeur.

D'autres avantages et caractéristiques apparaîtront à l'examen de la description détaillée d'un mode de réalisation nullement limitatif, et des dessins annexés, sur lesquels :
- la figure 1 est un schéma synoptique d'un exemple de réalisation d'un dispositif de calcul de l'accélération transversale d'un véhicule selon l'invention,
- la figure 2 représente plus précisément un exemple de réalisation d'un bloc logique de la figure 1,
- la figure 3 représente plus précisément un exemple de réalisation d'un autre bloc logique de la figure 1.

Dans la description suivante, des éléments analogues, identiques ou similaires seront désignés par les mêmes chiffres de référence.

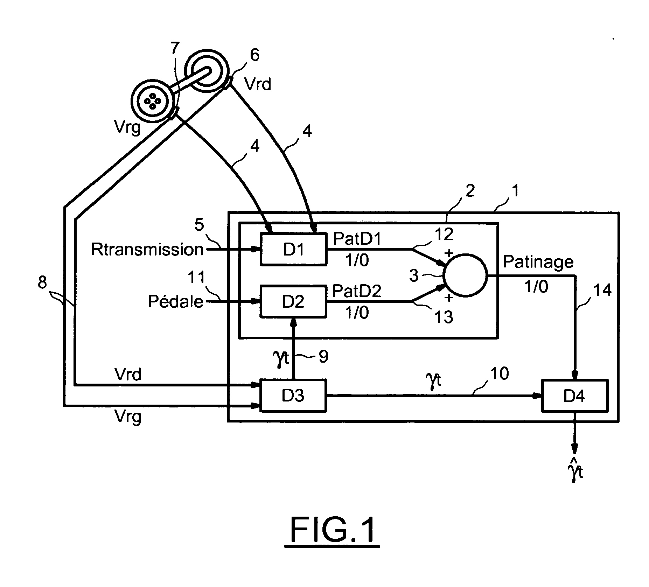

Tel qu'il est illustré sur la figure 1, un dispositif d'évaluation de l'accélération transversale d'un véhicule (non représenté) comprend un module de validation 2, un module d'estimation de l'accélération transversale D3 et un module de correction D4. Le module de validation 2 comprend lui-même deux blocs logiques D1 et D2 et un additionneur logique 3. Le bloc logique D1 reçoit par des connexions 4 les valeurs des vitesses angulaires de rotation Vrd et Vrg issues respectivement d'un capteur de vitesse de rotation 6 d'une roue droite et d'un capteur de vitesse de rotation 7 d'une roue gauche d'un même train de roues du véhicule. Le bloc D1 reçoit par une connexion 5 la valeur "Rtransmission" du rapport engagé dans le système de transmission du véhicule. Le module d'estimation de l'accélération transversale D3 reçoit par des connexions 8 les mêmes valeurs de vitesses de rotation Vrd et Vrg issues des capteurs 6 et 7. Le module D3 transmet une valeur estimée γt d'accélération transversale par une connexion 9 au bloc logique D2, et transmet la même valeur γt par une connexion 10 au module de correction D4. Le bloc logique D2 reçoit en outre par une connexion 11, une valeur "pédale" traduisant la consigne d'accélération du conducteur, qui peut être par exemple la position angulaire d'une pédale d'accélération. Cette consigne d'accélération pourrait aussi correspondre, entre autres, à un angle de manette d'accélérateur, une position de curseur d'accélération ou un angle de papillon des gaz. Les valeurs transitant par les connexions 5 et 11 peuvent par exemple être envoyées par un ordinateur de bord et transmises aux blocs D1 et D2 via le réseau multiplexé ou tout autre moyen de communication entre calculateurs. Les blocs logiques D1 et D2 envoient respectivement une valeur booléenne PatD1 par une connexion 12, et une valeur booléenne PatD2 par une connexion 13 vers l'additionneur logique 3, qui envoie une variable logique "Patinage" par une connexion 14 au module de correction D4. Le module de correction D4 délivre une accélération transversale corrigée γ̂*ₜ* qui peut être envoyée, suivant les applications, à un système de gestion d'une boîte de commande automatique du véhicule, à un système de contrôle de l'orientation des phares en virage, ou tout autre système utilisant l'accélération transversale et pouvant s'accommoder des plages d'incertitude du calcul de l'accélération transversale suivant l'invention.

Le module d'estimation de l'accélération transversale D3, à partir des vitesses angulaires de rotation des deux roues Vrd et Vrg, effectue une estimation de l'accélération transversale γt qu'aurait le véhicule si aucune des deux roues ne se trouvait en situation de glissement par rapport à la chaussée. Cette estimation peut par exemple être effectuée par la méthode décrite dans la demande de brevet FR 2802 646 au nom de la demanderesse. La valeur de l'accélération transversale ainsi estimée γt est transmise au bloc D2 qui l'utilise pour calculer la variable PatD2, et est également transmise au module de correction D4. A partir des paramètres de fonctionnement du véhicule, i.e. des vitesses de rotation des deux roues équipées des capteur 6 et 7, du rapport de transmission engagé et de la consigne d'accélération du conducteur, ainsi que de l'accélération transversale estimée par le bloc D3, les blocs logiques D1 et D2 calculent les variables booléennes PatD1 et PatD2. Ces deux valeurs sont envoyées sur l'additionneur 3 qui délivre par la connexion 14 la variable booléenne de patinage "Patinage", somme logique de PatD1 et PatD2, qui est positive si l'une des variables PatD1 ou PatD2 est positive (ou notée 1), et qui est négative (ou notée 0) si les deux variables PatD1 et PatD2 sont négatives (égales à zéro). Cette variable Patinage est donc négative si les tests effectués par D1 et D2 ne détectent pas de glissement d'une des deux roues, elle est positive si un glissement d'au moins une des roues est détecté.

Le module de correction D4 calcule une valeur corrigée γ̂ₜ, de l'accélération transversale comme suit : Si la variable booléenne Patinage correspondant à l'instant auquel est estimée l'accélération transversale γt est négative, la valeur corrigée γ̂ₜ est égale à la valeur estimée γt; si la variable booléenne Patinage correspondant à l'instant auquel est estimée l'accélération transversale γt est positive, la valeur corrigée γ̂ₜ est égale à une valeur arbitraire γ̂₀. La valeur arbitraire γ̂₀ peut par exemple être choisie égale à zéro, afin que le dispositif de gestion des lois de passage de la transmission automatique interprète ce résultat comme correspondant à une absence de virage de la chaussée. Dans une variante de l'invention, la valeur γ̂₀ pourrait être choisie égale à une constante arbitraire négative, par exemple la valeur -1. De cette manière, le ou les systèmes utilisant la valeur de l'accélération transversale peuvent détecter une situation de patinage potentiel à la lecture de γ̂ₜ. Dans une variante de réalisation qui peut se combiner à la précédente, le module de correction D4 peut imposer à γ̂ₜ une temporisation δt (par exemple de l'ordre de 0,01 secondes à 1 seconde) en maintenant chaque fois la valeur γ̂ₜ a sa valeur γ̂₀ durant une période δt après que la variable booléenne Patinage soit redevenu négative. La temporisation peut également être imposée directement à la variable Patinage, lorsqu'elle passe de la valeur positive (1) à la valeur négative (0).

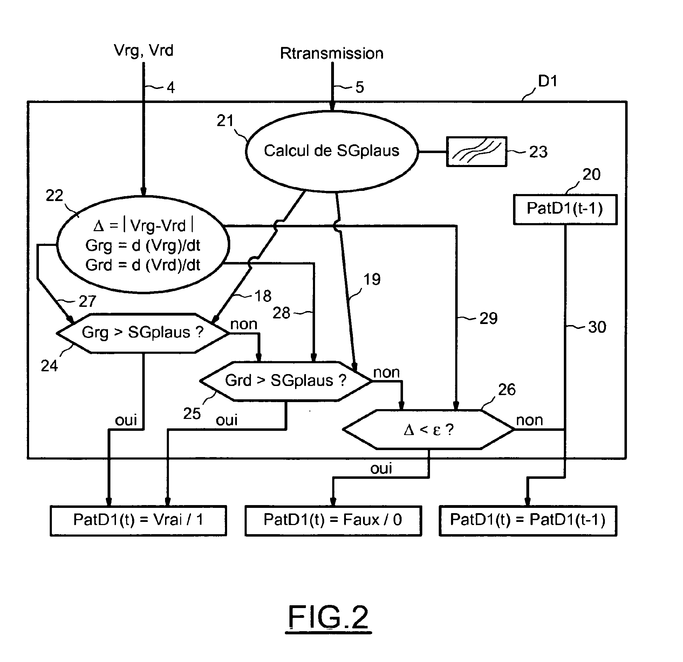

La figure 2 représente un organigramme de calcul de la variable booléenne PatD1 de sur accélération de roue par le bloc logique D1 de la figure 1. A un instant de calcul t, le bloc D1 reçoit par la connexion 4 les valeurs de vitesses angulaires de rotation de deux roues Vrg et Vrd d'un même train de roues, et reçoit par la connexion 5 l'identifiant du rapport de transmission engagé. Parallèlement, le bloc D1 garde dans une mémoire 20 la valeur de la variable booléenne PatD1 calculée à l'instant de calcul précédent (instant de calcul t-1). La connexion 4 est reliée à un bloc de calcul 22, la connexion 5 est reliée à un bloc de calcul 21, capable de lire dans une cartographie mémorisée 23. Trois blocs de tests 24, 25, 26 permettent, à partir de la valeur stockée dans la mémoire 20, et des valeurs calculées par les blocs 21 et 22, d'attribuer une valeur à la variable booléenne PatD1 à l'instant t. Le bloc de calcul 22 calcule les accélérations Grg et Grd des deux roues en dérivant leurs vitesses Vrg et Vrd par rapport au temps. Le bloc 22 calcule également la valeur absolue de la différence Δ des deux vitesses Vrg et Vrd, soit Δ = |Vrg-Vrd|. Les deux valeurs Grg et Grd sont envoyées par les connexions 27 et 28 respectivement aux blocs de test 24 et 25. La valeur Δ est envoyée au bloc de test 26 par la connexion 29. Le bloc de calcul 21 extrait de la cartographie 23, en fonction du rapport de transmission engagé "Rtransmission", la valeur SGplaus représentant le seuil d'accélération plausible pour une roue Grg ou Grd en absence de glissement de cette roue. Ce seuil cartographié SGplaus est choisi tel que SGplaus multiplié par le rayon d'une roue soit proche de la valeur de l'accélération maximale que peut atteindre le véhicule pour le rapport de transmission engagé. Cette valeur SGplaus est envoyée aux blocs de tests 24 et 25 par les connexions 18 et 19 respectivement. Les blocs 24 et 25 attribuent à la valeur PatD1 une valeur positive (ou notée 1) si l'une des accélérations de roues est supérieure à la valeur plausible SGplaus. Le bloc 26 analyse le cas où les deux valeurs Grg et Grd sont dans le domaine de plausibilité, c'est-à-dire inférieures à SGplaus. Si la différence Δ entre les deux vitesses de roues est réduite, c'est-à-dire inférieure à un seuil d'écart ε arbitraire (proche de zéro, par exemple ε égal à 0,1 km/h), l'hypothèse du patinage est écartée, PatD1 prend une valeur négative (aussi notée 0). Si les deux valeurs Grg et Grd sont dans le domaine de plausibilité et que la différence entre les deux vitesses de roues est supérieure au seuil ε, le bloc 26 affecte à la valeur PatD1 à l'instant t, la valeur, extraite de la mémoire 20 par la connexion 30, qu'avait PatD1 à l'instant de calcul précédent (instant t-1). De cette manière, dans le bloc D1, un début de patinage de roue est détecté lorsque l'une des accélérations de roues passe au dessus du seuil de plausibilité, et la variable booléenne continue à signaler l'état de patinage tant que les deux vitesses de roues ne passent pas par une valeur identique. En effet, dans la pratique, le début du patinage se caractérise par une brusque augmentation de la vitesse de la roue intérieure au virage, donc par un pic d'accélération de la roue en question. Les blocs 24 et 25 détectent ces débuts de patinage. La fin du patinage se caractérise par un croisement des courbes des vitesses des deux roues, car la vitesse de la roue intérieure au virage est inférieure à la vitesse de la roue extérieure lorsque les deux roulent sans patiner. Le bloc 26 détecte donc cette fin de patinage.

Le bloc logique D1 est en mesure de détecter la plupart des phénomènes de patinage en virage grâce à la calibration des accélérations plausibles de roues stockées dans la cartographie 23. Dans une variante de réalisation de l'invention, le bloc logique D1 peut constituer à lui seul le module de validation 2, auquel cas la variable Patinage s'identifie à la variable PatD1. Les seuils SGplaus de la cartographie 23 sont calibrés à des valeurs suffisamment élevées pour limiter le nombre de fausses détections de patinage (résultat de calcul Patinage=1 alors qu'aucune des deux roues ne glisse). Si le véhicule se trouve en situation de survirage, l'invention évite ainsi de détecter l'accélération transversale γt comme non valide, ce qui est nécessaire notamment pour un bonne gestion des lois de passage de la transmission automatique. Le corollaire est qu'en revanche, certains cas de patinage ne sont alors pas détectés par le bloc logique D1.

Le rôle du bloc logique D2 dont le fonctionnement est détaillé figure 2, est de signaler certains des cas de patinage non détectés par le bloc D1 du fait de la calibration choisie pour les seuils de la cartographie 23. Le bloc logique D2 détecte spécifiquement des cas de patinage provoqués par un enfoncement de la pédale d'accélérateur pendant un virage. Il ne détecte donc aucun cas de patinage correspondant à une situation de survirage, car les cas de survirage se produisent lors d'un relâchement de la pédale d'accélérateur.

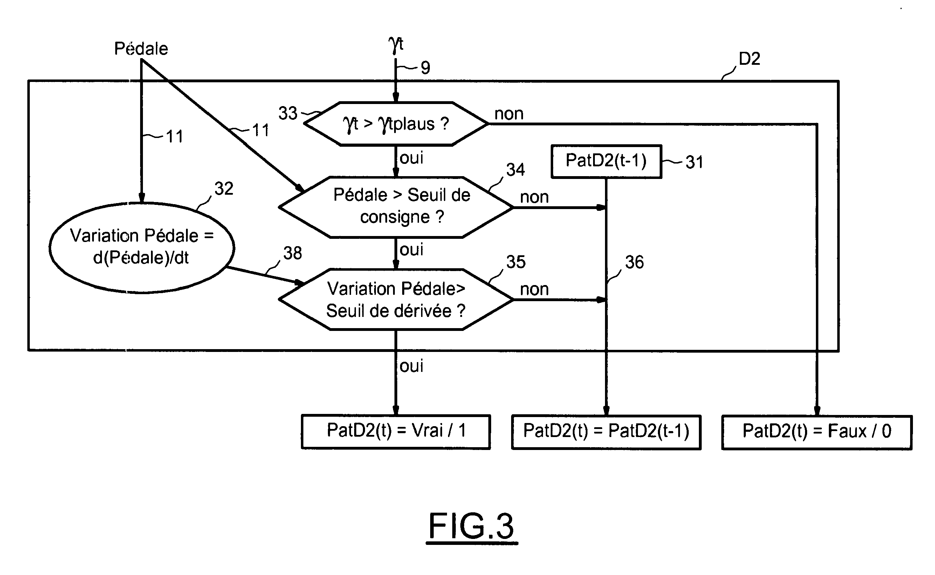

La figure 3 représente un organigramme de calcul de la variable booléenne PatD2 de sur accélération de roue par le bloc logique D2 de la figure 1. A un instant de calcul t, le bloc D2 reçoit par la connexion 9 le valeur de l'accélération transversale γt estimée par le bloc D3 de la figure 1et reçoit par la connexion 11 la consigne d'accélération du conducteur, représentée par la position angulaire "Pédale" de la pédale d'accélération du véhicule. Parallèlement, le bloc D2 garde dans une mémoire 31 la valeur de la variable booléenne PatD2 calculée à l'instant de calcul précédent (instant de calcul t-1). Le bloc logique D2 comporte un bloc de calcul 32 et trois blocs de tests 32, 34, et 35 qui permettent, à partir de la valeur stockée dans la mémoire 31, de la valeur calculée par le bloc de calcul 32, et des valeurs γt et Pédale, d'attribuer une valeur à la variable booléenne PatD2 à l'instant t. La connexion 11 est reliée au bloc de calcul 32 et au bloc de test 34. Le bloc de calcul 32 renvoie une valeur "Variation Pédale" au bloc de test 35 par une connexion 38. Le bloc de test 35 a accès à la mémoire 31 par une connexion 36. Le bloc 33 effectue une comparaison entre l'accélération transversale γt estimée par le bloc D3 et un seuil de centrifugation accélérée γtₚₗₐᵤₛ. Si γt est inférieure au seuil γtₚₗₐᵤₛ, l'hypothèse du patinage est exclue, et le bloc 33 affecte une valeur négative (aussi notée 0) à PatD2 à l'instant t. Le bloc 32 calcule la dérivée par rapport au temps de la variable Pédale, et délivre par la connexion 38 une valeur Variation Pédale représentant la vitesse angulaire de déplacement de la pédale d'accélérateur. Dans le cas où γt est inférieure au seuil de centrifugation accélérée γtₚₗₐᵤₛ, les blocs de test 34 et 35 effectuent les comparaisons de la valeur Pédale et de sa dérivée Variation Pédale respectivement par rapport à deux seuils constants "Seuil de Consigne" et "Seuil de Dérivée (de consigne)". Si la valeur Pédale et la valeur de sa dérivée Variation Pédale sont tourtes deux supérieures à leurs seuils respectifs, la valeur PatD2 à l'instant t prend la valeur positive (aussi notée 1). Dans le cas contraire, le bloc 35 affecte à la valeur PatD2 à l'instant t, la valeur, extraite de la mémoire 31 par la connexion 36, qu'avait PatD2 à l'instant de calcul précédent (instant t-1). Le rôle du bloc D2 est de détecter les cas de patinage survenant lors d'un coup de pédale d'accélérateur du conducteur en cours de virage, notamment dans les cas de figures où la situation de patinage n'a pas été détectée par le bloc logique D1. A cette fin, le seuil de centrifugation accélérée γtₚₗₐᵤₛ, qui est une valeur constante, est avantageusement choisi élevé dans le domaine des accélérations plausibles du véhicule. En pratique, une accélération proche de 10ms⁻², par exemple comprise entre 8 et 12ms⁻² permet d'obtenir un niveau de détection raisonnable.

Une des applications du procédé est la gestion des lois de passage de la transmission en fonction de la courbure de la chaussée sur laquelle circule le véhicule. L'application du procédé ne se limite cependant pas à cette gestion des rapports de transmission : il peut être appliqué à la gestion de tout organe du véhicule qui nécessite une estimation de l'accélération transversale du véhicule, et qui est cependant capable de s'accommoder de l'indisponibilité de cette information lors des cas de patinage des roues motrices.

Le raisonnement décrit plus haut sur le choix des variables booléennes et les valeurs qui leur sont attribuées, doit bien sûr être compris au sens fonctionnel. Les valeurs positives et négatives des variables pourraient êtres désignées par d'autres couples de valeurs, Oui/Non, Vrai/Faux, Patinant/Adhérent... Les valeurs booléennes pourraient avoir des définitions opposées à celle de la description et des revendications, les propositions logiques citées étant alors reformulées en conséquence.

La réalisation de l'invention sous forme de blocs logiques ou de blocs de calculs, peut se faire sous forme de composants électroniques ou de calculateurs physiquement indépendants agencés comme décrit plus haut. L'invention peut également être réalisée en programmant tous les blocs logiques et les blocs de calculs décrits sous forme logicielle, le programme correspondant, ainsi que ses sous programmes, étant implantés dans un ou plusieurs calculateurs, intégrés ou non à l'unité de commande électronique.

L'invention permet de proposer à moindre coût, sur des véhicules équipés de seulement deux capteurs de vitesses de roues sur ses roues motrices (par exemple pour des véhicules à traction avant dépourvus d'ABS), des fonctions de confort utilisant la valeur de l'accélération transversale du véhicule, telles que la gestions des lois de passage d'une boîte de commande automatique, ou l'orientation des phares en virage.

## Revendications

1. Dispositif d'évaluation de l'accélération transversale d'un véhicule automobile, comprenant des moyens de mesure (6, 7) des vitesses de rotation de deux roues du véhicule et un module d'estimation (D3) de l'accélération transversale du véhicule à partir de ces vitesses, **caractérisé en ce qu'**il comprend en outre un module de validation (2) apte à calculer, en fonction de paramètres de fonctionnement du véhicule comprenant les vitesses de rotation desdites roues et le rapport de transmission engagé, une variable booléenne de patinage qui est négative si l'accélération transversale estimée par le module est pertinente pour détecter un virage, et qui est positive dans le cas contraire.

2. Dispositif d'évaluation selon la revendication 1, dans lequel lesdites roues sont une roue droite motrice et une roue gauche motrice appartenant à un même train de roues du véhicule.

3. Dispositif d'évaluation suivant l'une des revendications précédentes, comprenant en outre un module de correction (D4) apte à délivrer une valeur corrigée de l'accélération transversale de manière à ce que ladite valeur corrigée soit égale à la valeur estimée précédemment de l'accélération transversale si la variable booléenne de patinage est négative, et que cette valeur corrigée soit égale à une constante arbitraire dans le cas contraire.

4. Dispositif d'évaluation selon l'une des revendications précédentes, dans lequel le module de validation (2) comprend un premier module booléen (D1) apte à délivrer une première variable booléenne de sur accélération de roue, lequel module (D1) comprend un premier moyen de calcul (22) des accélérations des deux roues, un second moyen de calcul (21) d'un seuil d'accélération plausible de ces roues en fonction du rapport de transmission engagé, des premiers moyens de comparaison (24, 25) des accélérations de chacune des deux roues par rapport audit seuil d'accélération plausible de roues, des seconds moyens de comparaison (26) de la différence de vitesse entre les deux roues par rapport à un seuil d'écart, et des moyens de mémorisation (20) de la variable booléenne de sur accélération de roue.

5. Dispositif d'évaluation selon la revendication précédente, dans lequel le module de validation (2) comprend en outre un second module booléen (D2) recevant la valeur de la consigne d'accélération du conducteur et apte à délivrer une seconde variable booléenne de coup de pédale en virage, et dans lequel le module de validation (2) comprend un moyen de sommation (3) qui additionne la variable booléenne de sur accélération de roue et la variable booléenne de coup de pédale en virage pour obtenir la variable booléenne de patinage.

6. Dispositif d'évaluation selon la revendication précédente, dans lequel le second module booléen (D2) comprend un moyen (32) de dérivation par rapport au temps de la consigne d'accélération du conducteur, comprend des moyens de comparaison de la consigne d'accélération (34), de sa dérivée (35), et de l'accélération transversale (33) estimée précédemment, respectivement par rapport à trois valeurs de seuil de consigne, de seuil de dérivée de consigne, de seuil de centrifugation accélérée, et comprend des moyens de mémorisation (31) de la variable booléenne de coup de pédale en virage.

7. Dispositif de détection d'une situation de virage pour commande d'organe de véhicule automobile, notamment pour commande de transmission automatisée, comprenant un dispositif d'évaluation suivant l'une des revendications précédentes ainsi qu'un module d'arbitrage apte à décider si le véhicule est en situation de virage, ledit module d'arbitrage comprenant des moyens de comparaison de l'accélération transversale du véhicule et de la dérivée par rapport au temps de cette accélération, respectivement à une première valeur de seuil d'arbitrage et une seconde valeur de seuil d'arbitrage.

8. Procédé d'évaluation de l'accélération transversale d'un véhicule automobile, dans lequel on mesure les vitesses de rotation de deux roues motrices du véhicule, on estime l'accélération transversale du véhicule à partir de ces vitesses de roues, et on calcule en fonction de paramètres de fonctionnement du véhicule comprenant, notamment des les vitesses de rotation desdites roues motrices et du le rapport de transmission engagé, une variable booléenne de patinage qui est une variable booléenne de patinage qui est négative si l'accélération transversale estimée par le module est pertinente pour détecter un virage et qui est positive dans le cas contraire.

9. Procédé d'évaluation selon la revendication précédente, dans lequel, si la variable de patinage est positive, on corrige ensuite l'accélération transversale correspondante en lui attribuant une valeur arbitraire.

10. Procédé d'évaluation suivant les revendications 8 ou 9, dans lequel la variable booléenne de patinage est la somme d'une première variable booléenne de sur accélération de roue et d'une seconde variable booléenne de coup de pédale en virage dont le calcul comprend les étapes suivantes :
- on calcule, à l'aide d'une cartographie mémorisée (23), un seuil d'accélération plausible de roues en fonction du rapport de transmission engagé; si la dérivée par rapport au temps d'une des vitesses mesurées de rotation de roues est supérieure à ce seuil d'accélération plausible de roues, la variable de sur accélération de roue est positive; si les deux dérivées par rapport au temps des vitesses mesurées de rotation de roues sont inférieures à ce seuil d'accélération plausible de roues et que simultanément la différence de vitesses de rotation des deux roues est inférieure à un seuil d'écart, constant, la variable de sur accélération de roue est négative; dans les autres cas la variable de sur accélération de roue conserve sa valeur :
- on calcule la dérivée par rapport au temps de la consigne d'accélération du conducteur;
- on compare la consigne d'accélération du conducteur, sa dérivée, et l'accélération transversale estimée du véhicule par rapport à trois valeurs de seuil de consigne, de seuil de dérivée de consigne, et de seuil de centrifugation accélérée; si les trois valeurs sont simultanément supérieures à leurs seuils respectifs, la variable de coup de pédale en virage est positive; si l'accélération transversale du véhicule est inférieure à son seuil respectif, la variable de coup de pédale en virage est négative; dans les autres cas la variable de coup de pédale en virage conserve sa valeur.

## Claims

1. Device for evaluating the transverse acceleration of an automobile vehicle, comprising means of measuring (6, 7) the rotational speeds of two wheels of the vehicle and a module for estimating (D3) the transverse acceleration of the vehicle from these speeds, **characterized in that** it also comprises a validation module (2) capable of calculating, as a function of operating parameters of the vehicle, comprising the rotational speeds of said wheels and the transmission ratio engaged, a Boolean skidding variable which is negative if the transverse acceleration estimated by the module is relevant for detecting a turn, and which is positive if the reverse is true.

2. Evaluation device according to Claim 1, in which said wheels are a right drive wheel and a left drive wheel belonging to one and the same wheel set of the vehicle.

3. Evaluation device according to one of the preceding claims, also comprising a correction module (D4) capable of delivering a corrected value of the transverse acceleration in such a manner that said corrected value is equal to the previous estimated value of the transverse acceleration if the Boolean skidding variable is negative, and that this corrected value is equal to an arbitrary constant if the reverse is true.

4. Evaluation device according to one of the preceding claims, in which the validation module (2) comprises a first Boolean module (D1) capable of delivering a first Boolean wheel over-acceleration variable, which module (D1) comprises a first means of calculating (22) the accelerations of the two wheels, a second means of calculating (21) a plausible acceleration threshold for these wheels as a function of the transmission ratio engaged, first means of comparison (24, 25) of the accelerations of each of the two wheels with respect to said plausible wheel acceleration threshold, second means of comparison (26) of the difference in speed between the two wheels with respect to a difference threshold, and means of storing (20) the Boolean wheel over-acceleration variable.

5. Evaluation device according to the preceding claim, in which the validation module (2) also comprises a second Boolean module (D2) receiving the value of the acceleration setpoint from the driver and capable of delivering a second in-turn Boolean pedal application variable, and in which the validation module (2) comprises a summing means (3) which adds together the Boolean wheel over-acceleration variable and the in-turn Boolean pedal application variable in order to obtain the Boolean skidding variable.

6. Evaluation device according to the preceding claim, in which the second Boolean module (D2) comprises a means (32) of determining the derivative of the acceleration setpoint from the driver with respect to time, comprises means of comparison of the acceleration setpoint (34), of its derivative (35) and of the previously estimated transverse acceleration (33), with respect to three values of setpoint threshold, of setpoint derivative threshold, of accelerated centrifugation threshold, respectively, and comprises means of storing (31) the in-turn Boolean pedal application variable.

7. Device for detecting a turning situation for controlling an automobile vehicle mechanism, notably for automatic transmission control, comprising an evaluation device according to one of the preceding claims, together with an arbitration module capable of deciding whether the vehicle is in a turning situation, said arbitration module comprising means of comparison of the transverse acceleration of the vehicle and of the derivative with respect to time of this acceleration, with a first value of arbitration threshold and a second value of arbitration threshold, respectively.

8. Method for evaluating the transverse acceleration of an automobile vehicle, in which the rotational speeds of two drive wheels of the vehicle are measured, the transverse acceleration of the vehicle is estimated from these wheel speeds, and a Boolean skidding variable is calculated as a function of operating parameters of the vehicle, comprising notably the rotational speeds of said drive wheels and the transmission ratio engaged, which variable is negative if the transverse acceleration estimated by the module is relevant for detecting a turn, and which is positive if the reverse is true.

9. Evaluation method according to the preceding claim, in which, if the skidding variable is positive, the corresponding transverse acceleration is then corrected by assigning it an arbitrary value.

10. Evaluation method according to either of Claims 8 and 9, in which the Boolean skidding variable is the sum of a first Boolean wheel over-acceleration variable and of a second Boolean in-turn pedal application variable whose calculation comprises the following steps:
- using a stored data map (23), a plausible wheel acceleration threshold is calculated as a function of the transmission ratio engaged; if the derivative with respect to time of one of the measured wheel rotational speeds is greater than this plausible wheel acceleration threshold, the wheel over-acceleration variable is positive; if the two derivatives with respect to time of the measured wheel rotational speeds are less than this plausible wheel acceleration threshold and if, simultaneously, the difference in rotational speeds of the two wheels is less than a (constant) difference threshold, the wheel over-acceleration variable is negative; in the other cases, the wheel over-acceleration variable keeps its value;
- the derivative with respect to time of the acceleration setpoint from the driver is calculated;
- the acceleration setpoint from the driver, its derivative and the estimated transverse acceleration of the vehicle are compared with respect to three values of setpoint threshold, of setpoint derivative threshold and of accelerated centrifugation threshold; if the three values are simultaneously greater than their respective thresholds, the in-turn pedal application variable is positive; if the transverse acceleration of the vehicle is less than its respective threshold, the in-turn pedal application variable is negative; in the other cases, the in-turn pedal application variable keeps its value.

## Patentansprüche

1. Vorrichtung zur Bewertung der Querbeschleunigung eines Kraftfahrzeugs, die Messeinrichtungen (6, 7) der Drehgeschwindigkeiten von zwei Rädern des Fahrzeugs und ein Schätzmodul (D3) der Querbeschleunigung des Fahrzeugs ausgehend von diesen Geschwindigkeiten enthält, **dadurch gekennzeichnet, dass** sie außerdem ein Validierungsmodul (2) enthält, das abhängig von Betriebsparametern des Fahrzeugs, die die Drehgeschwindigkeiten der Räder und den eingelegten Getriebegang enthalten, eine Boolesche Variable des Schlupfs berechnen kann, die negativ ist, wenn die vom Modul geschätzte Querbeschleunigung relevant ist, um eine Kurve zu erfassen, und die im gegenteiligen Fall positiv ist.

2. Bewertungsvorrichtung nach Anspruch 1, bei der die Räder ein rechtes Antriebsrad und ein linkes Antriebsrad sind, die zum gleichen Radsatz des Fahrzeugs gehören.

3. Bewertungsvorrichtung nach einem der vorhergehenden Ansprüche, die außerdem den Korrekturmodul (D4) enthält, das einen korrigierten Wert der Querbeschleunigung liefern kann, derart, dass der korrigierte Wert gleich dem vorher geschätzten Wert der Querbeschleunigung ist, wenn die Boolesche Schlupf-Variable negativ ist, und dieser korrigierte Wert im gegenteiligen Fall gleich einer willkürlichen Konstanten ist.

4. Bewertungsvorrichtung nach einem der vorhergehenden Ansprüche, bei der das Validierungsmodul (2) ein erstes Boolesches Modul (D1) enthält, das eine erste Boolesche Variable der Rad-Überbeschleunigung liefern kann, wobei das Modul (D1) eine erste Einrichtung (22) zur Berechnung der Beschleunigungen der zwei Räder, eine zweite Einrichtung (21) zur Berechnung einer plausiblen Beschleunigungsschwelle dieser Räder abhängig vom eingelegten Getriebegang, erste Einrichtungen (24, 25) zum Vergleich der Beschleunigungen jedes der zwei Räder bezüglich der plausiblen Räder-Beschleunigungsschwelle, zwei Einrichtungen (26) zum Vergleich der Geschwindigkeitsdifferenz zwischen den zwei Rädern bezüglich einer Abweichungsschwelle, und Einrichtungen (20) zum Speichern der Booleschen Variablen einer Rad-Überbeschleunigung enthält.

5. Bewertungsvorrichtung nach dem vorhergehenden Anspruch, bei der das Validierungsmodul (2) außerdem ein zweites Boolesches Modul (D2) enthält, das den Wert des Beschleunigungsbefehls des Fahrers empfängt und eine zweite Boolesche Variable eines Niedertretens eines Pedals in einer Kurve liefern kann, und bei der das Validierungsmodul (2) eine Summiereinrichtung (3) enthält, die die Boolesche Variable der Rad-Überbeschleunigung und die Boolesche Variable eines Niedertreten eines Pedals in einer Kurve addiert, um die Boolesche Schlupf-Variable zu erhalten.

6. Bewertungsvorrichtung nach dem vorhergehenden Anspruch, bei der das zweite Boolesche Modul (D2) eine Ableitungseinrichtung (32) bezüglich des Zeitpunkts des Beschleunigungsbefehls des Fahrers, Einrichtungen zum Vergleich des Beschleunigungsbefehls (34), seiner Ableitung (35) und der vorher geschätzten Querbeschleunigung (33) bezüglich von drei Werten einer Befehlsschwelle, einer Befehlsableitungsschwelle, einer Schwelle beschleunigter Zentrifugierung enthält, und Speichereinrichtungen (31) der Boolesche Variable eines Niedertretens eines Pedals in einer Kurve enthält.

7. Vorrichtung zur Erfassung einer Kurvensituation zur Steuerung eines Organs eines Kraftfahrzeugs, insbesondere für eine Automatikgetriebesteuerung, die eine Bewertungsvorrichtung nach einem der vorhergehenden Ansprüche sowie ein Entscheidungsmodul enthält, das entscheiden kann, ob das Fahrzeug in einer Kurvensituation ist, wobei das Entscheidungsmodul Einrichtungen zum Vergleich der Querbeschleunigung des Fahrzeugs und der Ableitung bezüglich des Zeitpunkts dieser Beschleunigung mit einem ersten Entscheidungsschwellwert bzw. einem zweiten Entscheidungsschwellwert enthält.

8. Bewertungsverfahren der Querbeschleunigung eines Kraftfahrzeugs, bei dem die Drehgeschwindigkeiten von zwei Antriebsrädern des Fahrzeugs gemessen werden, die Querbeschleunigung des Fahrzeugs ausgehend von diesen Rädergeschwindigkeiten geschätzt wird, und abhängig von Betriebsparametern des Fahrzeugs, die insbesondere die Drehgeschwindigkeiten der Antriebsräder und den eingelegten Getriebegang enthalten, eine Boolesche Schlupf-Variable berechnet wird, die negativ ist, wenn die vom Modul geschätzte Querbeschleunigung relevant ist, um eine Kurve zu erfassen, und die im gegenteiligen Fall positiv ist.

9. Bewertungsverfahren nach dem vorhergehenden Anspruch, bei dem, wenn die Schlupfvariable positiv ist, anschließend die entsprechende Querbeschleunigung korrigiert wird, indem ihr ein willkürlicher Wert zugeteilt wird.

10. Bewertungsverfahren nach Anspruch 8 oder 9, bei dem die Boolesche Schlupf-Variable die Summe einer ersten Boolesche Variablen der Rad-Überbeschleunigung und einer zweiten Booleschen Variablen eines Niedertretens eines Pedals in einer Kurve ist, deren Berechnung die folgenden Schritte enthält:
- mit Hilfe eines gespeicherten Kennfelds (23) wird eine plausible Räder-Beschleunigungsschwelle abhängig vom eingelegten Getriebegang berechnet; wenn die Ableitung bezüglich der Zeitpunkts einer der gemessenen Räder-Drehgeschwindigkeiten höher als diese plausible Räder-Beschleunigungsschwelle ist, ist die Rad-Überbeschleunigungsvariable positiv; wenn die zwei Ableitungen bezüglich des Zeitpunkts der gemessenen Räder-Drehgeschwindigkeiten niedriger als diese plausible Räder-Beschleunigungsschwelle sind und gleichzeitig die Drehgeschwindigkeitsdifferenz der zwei Räder niedriger als eine konstante Abweichungsschwelle ist, ist die Räder-Überbeschleunigungsvariable negativ; in den anderen Fällen behält die Rad-Überbeschleunigungsvariable ihren Wert;
- es wird die Ableitung bezüglich des Zeitpunkts des Beschleunigungsbefehls des Fahrers berechnet;
- der Beschleunigungsbefehl des Fahrers, seine Ableitung und die geschätzte Querbeschleunigung des Fahrzeugs werden bezüglich von drei Werten einer Befehlsschwelle, einer Befehlsableitungsschwelle und einer Schwelle beschleunigter Zentrifugierung verglichen; wenn die drei Werte gleichzeitig höher als ihre jeweiligen Schwellen sind, ist die Variable eines Niedertretens eines Pedals in einer Kurve positiv; wenn die Querbeschleunigung des Fahrzeugs niedriger als ihre Schwelle ist, ist die Variable eines Niedertretens eines Pedals in einer Kurve negativ; in den anderen Fällen behält die Variable eines Niedertretens eines Pedals in einer Kurve ihren Wert.
